# EUROPEAN PATENT APPLICATION

(11) **EP 4 650 090 A1**
(43) Date of publication of application: **19.11.2025**
(21) Application number: 25175845.4
(22) Date of filing: 12.05.2025
(51) Int. Cl.: B23K 9/32

(54) **FUME EXTRACTOR ATTACHMENTS AND FUME EXTRACTION SYSTEMS FOR ROBOTIC WELDING ARM**

(30) Priority: 13.05.2024 US 202463646160 P; 07.05.2025 US 202519201162
(71) Applicant: Illinois Tool Works Inc., Glenview IL 60025 (US)
(72) Inventor: SOMMERS, Eric, Glenview, IL 60025 (US); SCHNEIDER, Joseph C., Glenview, IL 60025 (US)
(74) Representative: HGF

(57) **Abstract**

A fume extractor for a robotic welding arm may comprise: a vacuum manifold, comprising: a plurality of intake ports, an arm attachment mount configured to attach to a first arm section of the robotic welding arm, and an outlet port configured to connect to a vacuum source; a plurality of flexible tubes, each comprising a first end and a second end opposite the first end, wherein the first end of each of the flexible tubes is coupled to at least one of the intake ports; and one or more retainers configured to retain each of the flexible tubes in proximity to a welding torch coupled to the robotic welding arm as the welding torch rotates and moves.

## Description

### RELATED APPLICATIONS

The present application claims the benefit of U.S. Provisional Patent Application Serial No. 63/646,160, filed May 13, 2024, entitled "FUME EXTRACTOR ATTACHMENTS AND FUME EXTRACTION SYSTEMS FOR ROBOTIC WELDING ARM." The entirety of U.S. Provisional Patent Application Serial No. 63/646,160 is expressly incorporated herein by reference.

### FIELD OF THE DISCLOSURE

This disclosure relates generally to fume extraction, and more particularly to a fume extractor attachment and a fume extraction system for welding torches, robotic welding arms, and welding torches coupled to robotic welding arms.

### BACKGROUND

Welding operations result in substantial fumes which, if not captured, disperse into the local environment (e.g., room, building) in which the welding operations are occurring. Such fumes or other airborne components may dissipate, or be captured and filtered from the air.

### SUMMARY

Fume extractor attachments, fume extractor systems, and robotic welding systems having fume extractor attachments and/or fume extractor systems are disclosed, substantially as illustrated by and described in connection with at least one of the figures and as set forth in the claims.

### BRIEF DESCRIPTION OF THE DRAWINGS

FIG. 1A illustrates an example robotic welding system including a fume extraction attachment mounted to a robotic welding arm, in accordance with aspects of this disclosure;
FIGS. 1B and 1C illustrate example robotic welding systems including a fume extraction system having a fume extractor attachment mounted to a robotic welding arm, in accordance with aspects of this disclosure;
FIG. 2 illustrates an example fume extractor attachment attached to a robotic welding arm, in accordance with aspects of this disclosure;
FIGS. 3A and 3B illustrate example retainers attaching example flexible fume collection tubes to a robotic welding arm, in accordance with aspects of this disclosure;
FIGS. 4A-4D illustrate example second ends of flexible fume collection tubes, in accordance with aspects of this disclosure; and
FIGS. 5A and 5B illustrate an example flexible fume collection tube, in accordance with aspects of this disclosure.

The figures are not necessarily to scale. Where appropriate, similar or identical reference numbers are used to refer to similar or identical components.

### DETAILED DESCRIPTION

Capturing weld fumes may be done using environment-level techniques (e.g., whole-facility filtering) and/or at a source of the weld fumes (for example, at an arc of a welding torch). Conventional source-capture fume extraction tools can include positioning a fume extraction hood near the source, or attaching or otherwise positioning a fume extraction arm near the source. However, positioning conventional fume extraction hoods and arms sufficiently close to the source can be difficult or impossible over the length of the weld.

Another type of source-capture fume collection device is the fume collection torch, which attaches a fume collection device to the weld torch. The size, position, and/or attachment mechanisms of conventional fume extraction devices can prevent robotic welding arms from reaching into tight areas of a weldment by, for example, interfering with ordinary movement, rotation, and/or positioning of a welding torch. Accordingly, conventional fume extraction devices may be, restricted in size to reduce interference with movement and rotation of the welding arm, which reduces fume collection capability. Further, to enable adequate freedom of movement and/or rotation of the welding arm and/or welding torch, and/or to enable positioning and/or fume extraction capacity of fume extraction arm(s), conventional fume extraction devices may be limited to usage with specialized, proprietary, and/or modified welding arms and/or welding torches by requiring specific sizes, designs, components, and/or configurations.

Accordingly, a need exists for a fume extraction device or system which may position a point of fume extraction near a source of weld fumes while limiting or eliminating interference, by the fume extraction device or system, with movement and/or rotation of the welding torch and/or an arm attached thereto.

Disclosed example fume extractor attachments, fume extractor systems, and welding systems having fume extractor attachments and/or fume extractor systems provide improved fume collection at or in proximity to points of fume generation (for example, nozzles of a welding torches). For example, disclosed example fume extractor attachments, fume extractor systems, and welding systems include one or more retainers which position one or more flexible tubes in proximity to one or more points of fume generation without limiting or substantially limiting the ability of welding torches, welding arms, sections of welding arms, or other components of welding systems to freely or substantially freely move and/or rotate.

In disclosed examples, a fume extractor attachment and/or fume extraction system is mounted onto a welding arm and/or onto a welding torch to enable fume extraction at a location adjacent to and/or in proximity to the welding torch. In some such examples, the fume extractor attachment and/or fume extraction system capture and channel weld fumes through one or more flexible tubes via a vacuum source coupled to the one or more flexible tubes. In disclosed examples, the flexible tubes are bendable and/or have an elastic length such that the one or more flexible tubes can move and/or rotate with a welding arm and/or welding torch in proximity to which the one or more flexible tubes are retained.

In disclosed examples, one or more flexible tubes of a fume extractor attachment and/or fume extractor system are retained by one or more retainers which retain an end and/or an inlet flange of such flexible tubes adjacent to and/or in proximity to a welding arm and/or a welding torch as the welding arm and/or the welding torch rotates and moves. Accordingly, in some such disclosed examples, the one or more retainers enable a flexible attachment (rather than, for example, a rigid attachment) of the one or more flexible tubes to the welding arm and/or welding torch which allows free or substantially free movement and/or rotation of the welding arm and/or welding torch without disruption of the flexible attachment.

Further, disclosed examples may provide any, some, or all of such benefits without relying upon or otherwise requiring the usage of a particular welding arm and/or welding torch and/or the reconfiguration of a welding arm and/or welding torch. Rather, disclosed examples may enable off-the-shelf usage of the fume extractor attachment and/or fume extraction system with some, most, or any welding arms and/or welding torches already commercially available and, in certain disclosed examples, without reconfiguration. Disclosed examples utilize retainers which may attach to welding arms and/or welding torches of a wide variety of shapes, sizes, and configurations, which, in some such examples, provide an attachment mechanism attachable to a wide variety of welding torches and/or welding arms. Disclosed example fume extractor attachments and/or fume extraction systems may thereby be used for multiple different types of welding torches and/or robotic welding arms, and, in embodiments, disclosed example fume extractor attachments and/or fume extraction systems may be easily installed and removed from a variety of welding torches, reducing downtime of the robotic welding system to install, remove, and/or replace components of the fume extractor system.

Finally, disclosed examples have reduced limitations on sizes of tube(s) and/or inlet flange(s) of such tube(s) positioned adjacent to and/or in proximity to a welding torch. For example, the size having a reduced effect or no effect on the movement of, rotation of, and/or otherwise operation of the welding torch and/or a welding arm to which the flexible tubes are attached, as, in some such examples, the flexible attachment to the welding torch and/or welding arm provided by one or more disclosed retainers reducing or eliminating limitations on movement and/or rotation of the welding torch and/or welding arm caused by the size and/or position of such flexible tubes. Accordingly, some such disclosed examples, when compared to typical fume extraction devices, reduce or eliminate tradeoffs between suction power (for example, as a function of tube size or position) of such fume extraction devices and movability of welding torches and/or welding arms to which such fume extraction devices are attached.

Disclosed example fume extractor attachments include: a vacuum manifold, comprising: a plurality of intake ports; an arm attachment mount configured to attach to a first arm section of the robotic welding arm; and an outlet port configured to connect to a vacuum source; a plurality of flexible tubes, each comprising a first end and a second end opposite the first end, wherein the first end of each of the flexible tubes is coupled to at least one of the intake ports; and one or more retainers configured to retain each of the flexible tubes in proximity to a welding torch coupled to the robotic welding arm as the welding torch rotates and moves.

In some example fume extractor attachments, at least one of the flexible tubes comprises an elastic length between the first end and the second end, the elastic length configured to extend or contract a variable distance between the vacuum manifold and a nozzle of the welding torch. In some example fume extractor attachments, at least one of the flexible tubes is a corrugated tube. In some example fume extractor attachments, at least one of the flexible tubes comprises an inlet flange positioned at the second end. In some such example fume extractor attachments, each of the inlet flanges comprises at least one of a conical shape, a rectangular shape, or a triangular shape.

In some example fume extractor attachments, each of the one or more retainers is configured to couple the flexible tubes to the robotic welding arm by remaining in proximity to the robotic welding arm and retaining the flexible tubes in proximity to the retainer. In some example fume extractor attachments, each of the one or more retainers is configured to couple the flexible tubes to the robotic welding arm by remaining in proximity to the robotic welding arm and retaining the flexible tubes in proximity to the retainer, wherein the one or more retainers are configured to remain in proximity to the welding torch across at least 360° of rotation of the welding torch with respect to the first arm section. In some example fume extractor attachments, each of the one or more retainers is configured to couple the flexible tubes to the robotic welding arm by remaining in proximity to the robotic welding arm and retaining the flexible tubes in proximity to the retainer, wherein the one or more retainers are configured to remain in proximity to the welding torch across at least 360° of rotation of the welding torch with respect to the one or more retainers and the flexible tubes. In some example fume extractor attachments, each of the one or more retainers is configured to couple the flexible tubes to the robotic welding arm by remaining in proximity to the robotic welding arm and retaining the flexible tubes in proximity to the retainer, wherein at least one of the one or more retainers is configured to remain in proximity to the welding torch such that the second ends of each of the flexible tubes are positioned adjacent to a nozzle of the welding torch. In some example fume extractor attachments, each of the one or more retainers is configured to couple the flexible tubes to the robotic welding arm by remaining in proximity to the robotic welding arm and retaining the flexible tubes in proximity to the retainer, wherein a first retainer of the one or more retainers is positioned at a retaining position in proximity to the welding torch; and the first retainer applies an inward radial compression force configured to retain the retaining position in proximity to the welding torch, wherein an interior portion of the first retainer defines an expandable radius or a flexible shape which is adjusted based on at least one of rotation or movement of the welding torch.

In some example fume extractor attachments, each of the one or more retainers comprises a toroidal spring extending around the welding torch, the flexible tubes configured to be retained by respective windings of the toroidal spring. In some example fume extractor attachments, each of the one or more retainers is a rigid retainer. In some example fume extractor attachments, at least one of the flexible tubes is controllable to adjust an air flow through the flexible tubes.

Disclosed example robotic welding systems include: a robotic welding arm comprising a first arm section and a welding torch coupled to the first arm section; and a fume extractor attachment comprising: a vacuum manifold comprising: a plurality of intake ports; an outlet port configured to connect to a vacuum source; and an arm attachment mount configured to attach to the first arm section of the robotic welding arm; a plurality of flexible tubes, each comprising a first end and a second end opposite the first end, wherein the first end of each of the flexible tubes is coupled to at least one of the intake ports; and one or more retainers configured to retain each of the flexible tubes in proximity to the welding torch as the welding torch rotates and moves.

In some example robotic welding systems, each of the flexible tubes comprise an elastic length between the first end and the second end, the elastic length configured to extend or contract a variable distance between the vacuum manifold and a nozzle of the welding torch. In some example robotic welding systems, at least one of the flexible tubes is a corrugated tube. In some example robotic welding systems, at least one of the flexible tubes comprises an inlet flange positioned at the second end. In some such example fume extractor attachments, each of the inlet flanges comprises at least one of a conical shape, a rectangular shape, or a triangular shape.

In some example robotic welding systems, each of the one or more retainers is configured to couple the flexible tubes to the robotic welding arm by remaining in proximity to the robotic welding arm and retaining the flexible tubes in proximity to the retainer. In some example robotic welding systems, each of the one or more retainers is configured to couple the flexible tubes to the robotic welding arm by remaining in proximity to the robotic welding arm and retaining the flexible tubes in proximity to the retainer, wherein the one or more retainers are configured to remain in proximity to the welding torch across at least 360° of rotation of the welding torch with respect to the first arm section. In some example robotic welding systems, each of the one or more retainers is configured to couple the flexible tubes to the robotic welding arm by remaining in proximity to the robotic welding arm and retaining the flexible tubes in proximity to the retainer, wherein the one or more retainers are configured to remain in proximity to the welding torch across at least 360° of rotation of the welding torch with respect to the one or more retainers and the flexible tubes. In some example robotic welding systems, each of the one or more retainers is configured to couple the flexible tubes to the robotic welding arm by remaining in proximity to the robotic welding arm and retaining the flexible tubes in proximity to the retainer, wherein at least one of the one or more retainers is configured to remain in proximity to the welding torch such that the second ends of each of the flexible tubes are positioned adjacent to a nozzle of the welding torch. In some example robotic welding systems, each of the one or more retainers is configured to couple the flexible tubes to the robotic welding arm by remaining in proximity to the robotic welding arm and retaining the flexible tubes in proximity to the retainer, wherein a first retainer of the one or more retainers is positioned at a retaining position in proximity to the welding torch; and the first retainer applies an inward radial compression force configured to retain the retaining position in proximity to the welding torch, wherein an interior portion of the first retainer defines an expandable radius or a flexible shape which is adjusted based on at least one of rotation or movement of the welding torch.

In some example robotic welding systems, each of the one or more retainers is configured to couple the flexible tubes to the robotic welding arm by remaining in proximity to the robotic welding arm and retaining the flexible tubes in proximity to the retainer; each of the one or more retainers comprises a toroidal spring extending around the welding torch, the flexible tubes configured to be retained by respective windings of the toroidal spring. In some example robotic welding systems, each of the one or more retainers is a rigid retainer. In some example robotic welding systems, at least one of the flexible tubes is controllable to adjust an air flow through the flexible tubes.

In some example robotic welding systems, each of the one or more retainers is configured to couple the flexible tubes to the robotic welding arm by remaining in proximity to the robotic welding arm and retaining the flexible tubes in proximity to the retainer. In some such example robotic welding systems, the welding torch is configured to rotate with respect to the first arm section; and the retainers are configured to remain in proximity to the welding torch across at least 360° of rotation of the welding torch with respect to the first arm section. In some such example robotic welding systems, the welding torch is further configured to rotate with respect to the one or more retainers and the flexible tubes.

In some example robotic welding systems, the one or more retainers comprise a first retainer and a second retainer; the first retainer retains each of the flexible tubes in proximity to a second arm section of the robotic welding arm, the welding torch being attached to the second arm section; and the second retainer retains each of the flexible tubes in proximity to a third arm section of the robotic welding arm between the first arm section and the second arm section.

Disclosed example fume extraction systems include: a vacuum source comprising a hose port; a hose comprising a first hose end and a second hose end opposite the first hose end, wherein the second hose end is coupled to the hose port; and a fume extractor attachment comprising: a vacuum manifold comprising a plurality of intake ports, an outlet port coupled to the first hose end, and an arm attachment mount configured to attach to an arm section of a robotic welding arm, wherein the vacuum source extracts fumes from a welding torch of the robotic welding arm through the intake ports, out of the outlet port and into the hose, and into the hose port and the vacuum source; a plurality of flexible tubes, each comprising a first end and a second end opposite the first end, wherein the first end of each of the flexible tubes is coupled to at least one of the intake ports, and one or more retainers configured to retain each of the flexible tubes in proximity to a welding torch coupled to the robotic welding arm as the welding torch rotates and moves.

In some example fume extraction systems, at least one of the flexible tubes comprises an elastic length between the first end and the second end, the elastic length configured to extend or contract a variable distance between the vacuum manifold and a nozzle of the welding torch. In some example fume extraction systems, at least one of the flexible tubes is a corrugated tube. In some example fume extraction systems, at least one of the flexible tubes comprises an inlet flange positioned at the second end. In some such example fume extractor attachments, each of the inlet flanges comprises at least one of a conical shape, a rectangular shape, or a triangular shape.

In some example fume extraction systems, each of the one or more retainers is configured to couple the flexible tubes to the robotic welding arm by remaining in proximity to the robotic welding arm and retaining the flexible tubes in proximity to the retainer. In some example fume extraction systems, each of the one or more retainers is configured to couple the flexible tubes to the robotic welding arm by remaining in proximity to the robotic welding arm and retaining the flexible tubes in proximity to the retainer, wherein the one or more retainers are configured to remain in proximity to the welding torch across at least 360° of rotation of the welding torch with respect to the first arm section. In some example fume extraction systems, each of the one or more retainers is configured to couple the flexible tubes to the robotic welding arm by remaining in proximity to the robotic welding arm and retaining the flexible tubes in proximity to the retainer, wherein the one or more retainers are configured to remain in proximity to the welding torch across at least 360° of rotation of the welding torch with respect to the one or more retainers and the flexible tubes. In some example fume extraction systems, each of the one or more retainers is configured to couple the flexible tubes to the robotic welding arm by remaining in proximity to the robotic welding arm and retaining the flexible tubes in proximity to the retainer, wherein at least one of the one or more retainers is configured to remain in proximity to the welding torch such that the second ends of each of the flexible tubes are positioned adjacent to a nozzle of the welding torch. In some example fume extraction systems, each of the one or more retainers is configured to couple the flexible tubes to the robotic welding arm by remaining in proximity to the robotic welding arm and retaining the flexible tubes in proximity to the retainer, wherein a first retainer of the one or more retainers is positioned at a retaining position in proximity to the welding torch; and the first retainer applies an inward radial compression force configured to retain the retaining position in proximity to the welding torch, wherein an interior portion of the first retainer defines an expandable radius or a flexible shape which is adjusted based on at least one of rotation or movement of the welding torch.

In some example fume extraction systems, each of the one or more retainers comprises a toroidal spring extending around the welding torch, the flexible tubes configured to be retained by respective windings of the toroidal spring. In some example fume extraction systems, each of the one or more retainers is a rigid retainer. In some example fume extraction systems, at least one of the flexible tubes is controllable to adjust an air flow through the flexible tubes.

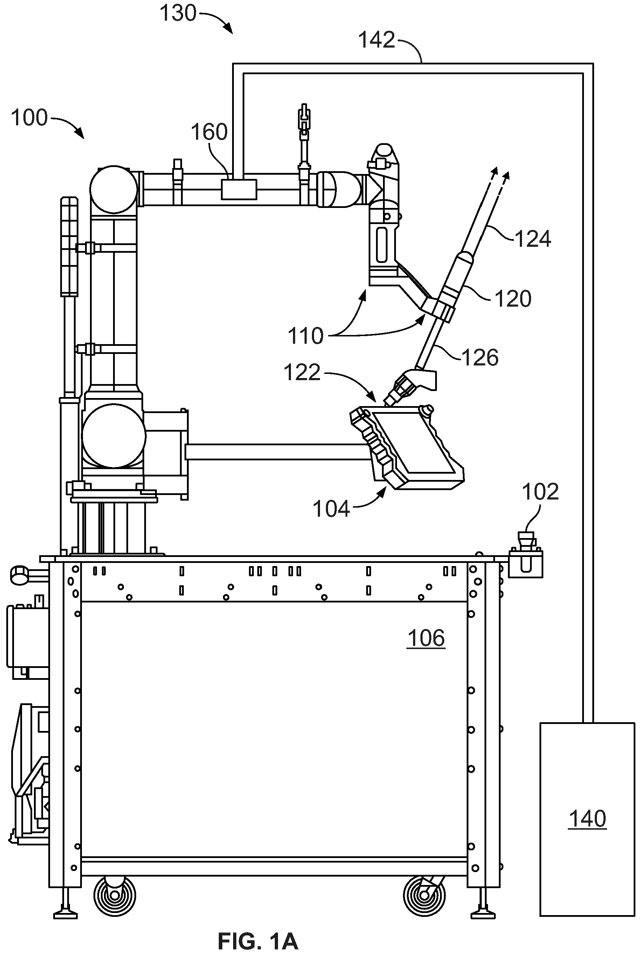

FIG. 1A illustrates an example robotic welding system 100 including a fume extraction system 130. The robotic welding system 100 includes a robotic welding arm 110 (and a welding torch 120 coupled to the robotic welding arm 110. The example welding arm 110 is a six-axis robotic manipulator, such as a conventional six-axis robotic manipulator or a thru-arm six-axis robotic manipulator. However, disclosed examples may be used with other types of robotic manipulators. The robotic welding arm 110 is electrically and/or mechanically coupled to the welding torch 120 such that the robotic welding arm 110 and/or an operator may position and/or operate the welding torch 120 during welding operations. The robotic welding system 100 is mounted on a work surface 106 (e.g., a table, a stand, a rack, or any other type of work surface). In some examples, the robotic welding system 100 may perform a welding operation on a work piece (not pictured) positioned on and/or removably fixed to the work surface 106 (e.g., clamped). The robotic welding system 100 may include control inputs 102 and/or a user interface 104 to inform and/or enable an operator to control the robotic welding system 100. However, in some examples, the robotic welding arm 110 and/or control circuitry controlling the robotic welding arm may be programmed to and/or controllable to conduct a welding operation autonomously (e.g., without human input during operation) and/or semi-autonomously (e.g., controlled partially by human input).

When conducting a welding operation, the welding torch 120 generates a welding arc near a nozzle 122 of the welding torch 120, and. A cable 124 conveys electrode wire, welding current, and shielding gas to the welding torch 120. The welding torch 120 further includes a neck 126 to position the nozzle 122 with respect to the welding torch 120.

Welding operations can generate substantial weld fumes which, if not captured, disperse into the local environment (e.g., a room and/or building) in which the welding operations occur. To effectively capture and dispose of weld fumes generated by the welding torch 120, the fume extraction system 130 captures weld fumes proximate to a point of emission of the weld fumes (for example, the welding arc) by suctioning the weld fumes into a vacuum source 140 coupled, via a hose 142, to a vacuum manifold 160 attached to the robotic welding arm 110. Because the fume extraction system 130 includes components retained in proximity to the welding torch 120, the fume extraction system 130 provides weld fume extraction without limiting or substantially limiting movement or rotation of the robotic welding arm 110 and/or the welding torch 120, and without depending upon a position and/or orientation of the robotic welding arm 110 and/or the welding torch 120.

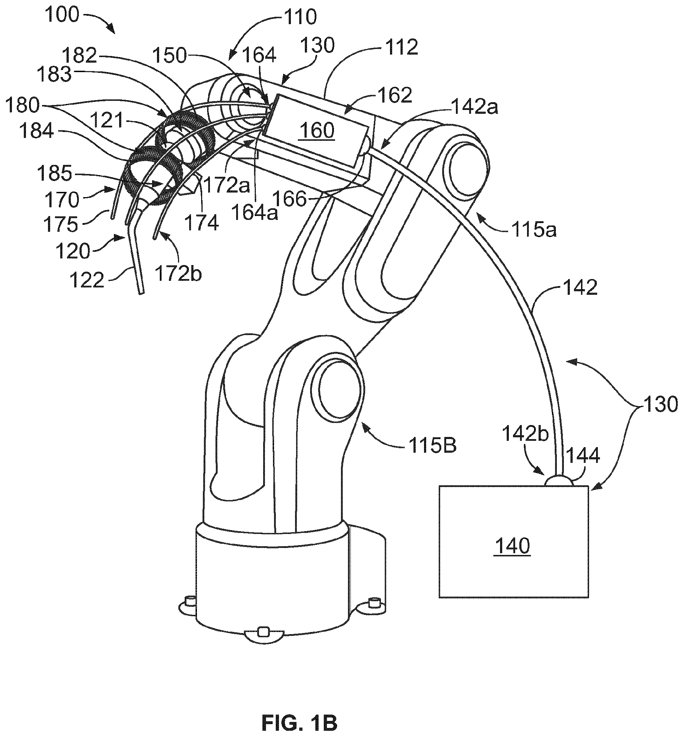

FIG. 1B illustrates example implementations of the robotic welding arm 110 of the robotic welding system 100 and the fume extraction system 130. In the example of FIG. 1B, the fume extraction system 130 includes a fume extractor attachment 150 having a vacuum manifold 160 and flexible tubes 170.

The example vacuum manifold 160 includes an arm attachment mount 162, which attaches the vacuum manifold 160 to a first arm section 112 of the robotic welding arm 110. To attach the vacuum manifold 160 to the first arm section 112, the arm attachment mount 162 may include one or more fasteners (for example, screws and/or attachment bands), flexible and/or rigid rigging, and/or one or more other mechanisms for attaching the vacuum manifold 160 to the first arm section 112. The arm attachment mount 162 may instead be a component of the robotic welding arm 110 or may be implemented using components (for example, mating couplers) of both the robotic welding arm 110 and the vacuum manifold 160.

The hose 142 couples the vacuum source 140 to the vacuum manifold 160 to extract weld fumes from the vacuum manifold 160 and into the vacuum source 140. The hose 142 attaches to an outlet port 166 of the vacuum manifold 160 at a first hose end 142A. The hose 142 also attaches to a hose port 144 of the vacuum source 140 at a second hose end 142B opposite the first hose end 142A.

The flexible tubes 170 may be elastic, partially or completely corrugated tubes, braided hoses, and/or any other flexible structure. To provide heat resistance, the flexible tubes 170 may be constructed using silicone, thermoplastics, and/or any other materials which provide flexibility under high-temperature conditions. Any, some, or all of the flexible tubes 170 may have diameters of the same magnitude or diameters of differing magnitude as diameters of any or some other flexible tubes of the flexible tubes 170. The flexible tubes 170 may define elastic lengths (as described in further detail elsewhere herein), such that, for example, a length of a respective one of the flexible tubes 170 may vary in magnitude as forces are exerted upon the one of the flexible tubes 170. Each of the flexible tubes 170 may vary in degree of flexibility and, in certain examples, one or more of the flexible tubes 170 may have greater or lesser flexibility compared to one or more other flexible tubes of the flexible tubes 170. Each of the flexible tubes 170 may be controllably closed or opened (for example, by valves, and as is described in further detail elsewhere herein). The flexible tubes 170 may include inlet flanges (as described in further detail elsewhere herein) positioned at ends of the flexible tubes 170 in proximity to the welding torch 120 to, for example, affect suctioning of the flexible tubes 170. While the example of FIG. 1B may depict the fume extraction system 130 and the fume extractor attachment 150 as comprising three of the flexible tubes 170, in other examples the fume extractor attachment 150 may include more or fewer of the flexible tubes 170 (e.g., 1 flexible tube, 2 flexible tubes, 4 flexible tubes, 5 flexible tubes, or 6 or more flexible tubes).

Each of the example flexible tubes 170 includes a first end 172A and a second end 172B opposite the first end 172A. The first end 172A of each of the flexible tubes 170 attaches to a corresponding one of the intake ports 164 of the vacuum manifold 160. The second end 172B is positioned proximate to the nozzle 122 to capture fumes from welding operations. Collectively, the flexible tubes 170 are coupled to the vacuum source 140 via the vacuum manifold 160 to provide a singular chamber from which to draw weld fumes suctioned from the second ends 172B, through the first ends 172A and the intake ports 164 into the vacuum manifold 160.

The fume extractor attachment 150 further includes one or more retainers 180, which retain the flexible tubes 170 to the robotic welding arm 110. One or more of the retainers 180 may retain the second end(s) 172B of one or more of the flexible tubes 170 in proximity to the welding torch 120 such that retained the second ends 172B are positioned proximate to the source of welding fumes (e.g., proximate to the nozzle 122 of the welding torch 120).

In the example of FIG. 1B, a first retainer 182 of the retainers 180 retains the flexible tubes 170 in proximity to a torch body 121 of the welding torch 120 at a first retaining position 183. A second retainer 184 of the retainers 180 retains the flexible tubes 170 (e.g., the second ends 172B of the flexible tubes 170) in proximity to the nozzle 122 of the welding torch 120 at a second retaining position 185. The retainers 180 may retain the flexible tubes 170 at one or more additional and/or alternative retaining positions including positions in contact with the welding torch 120, positions in proximity to the welding torch 120, and/or positions along any part of the robotic welding arm 110.

In the example of FIG. 1B, each of the flexible tubes 170 are suspended via the connection of each of the flexible tubes 170 to a respective one of the intake ports 164. The example intake ports 164 are non-rotating with respect to the arm section 112. Each of the flexible tubes 170 may further be suspended by any of the retainers 180 resting upon the robotic welding arm 110 and/or the welding torch 120. However, in some examples, any, some, or all of the flexible tubes 170 may be further suspended by an attachment to the robotic welding arm 110. For example, a hook, loop, or other attachment mechanism coupled to the arm section 112 at a position above the first retainer 182 may be used to attach one or more of the flexible tubes 170 to the arm section 112. In examples, a flexible tube of the flexible tubes 170 that is attached to the robotic welding arm 110 may have reduced flexibility compared to other flexible tubes of the flexible tubes 170, such as flexible tubes not attached to the robotic welding arm 110. In some such examples, by forming the flexible tube attached to the non-rotating component from a more rigid material, the rigidity of the flexible tube and the attachment of the flexible tube to the robotic welding arm 110 reduce friction between the retainers 180 (and/or the flexible tubes 170) and the welding torch 120 (and/or the robotic welding arm 110).

While the fume extraction system 130 and the fume extractor attachment 150 are depicted in FIG. 1B as including two retainers 180, in other examples the fume extractor attachment 150 may include more or fewer retainers (e.g., 1 retainer, 3 retainers, 4 retainers, 5 retainers, 6 retainers, or more) to retain the flexible tubes 170 in proximity to one or more sections of the robotic welding arm 110 and/or the welding torch 120 at a corresponding number of positions.

The vacuum manifold 160 may be attached to one or more arm sections in addition to or instead of the first arm section 112, such as a second arm section 115A, a third arm section 115B, and/or one or more additional and/or alternative arm sections of the robotic welding arm 110. In other examples, the vacuum manifold 160 is not attached to the robotic welding arm 110 at all. In some other examples, the fume extractor attachment 150 may omit the vacuum manifold 160, and couple the flexible tubes 170 directly to one or more vacuum sources (e.g., the vacuum source 140). In some such examples, the vacuum source 140 may be attached to the robotic welding arm 110.

In some examples, the fume extractor attachment 150 includes multiple vacuum manifolds 160, such that each of the vacuum manifolds 160 is attached to one or more of the flexible tubes 170 and one or more of the arm sections (or other components of the robotic welding arm 110). In some examples, the robotic welding system 100 and/or the fume extraction system 130 may include multiple vacuum sources 140, each of which is coupled to one or more of the flexible tubes 170 via zero or more of the vacuum manifolds 160. In embodiments, the fume extractor attachment 150 may be retrofitted to a conventional robotic welding arm, a plasma cutter, and/or a conventional vacuum source.

In some examples, components of the fume extractor attachment 150 may be integrally formed with the robotic welding arm 110. For example, rather than being fixed to the first arm section 112 by the arm attachment mount 162, the vacuum manifold 160 may be integrally formed with the first arm section 112 (by, for example, being formed from an interior chamber of the first arm section 112) and/or one or more other arm sections and/or components of the robotic welding arm 110. Further, any, some, or all of the flexible tubes 170, the vacuum source 140, and/or the hose 142 may be integrally formed with the robotic welding arm 110.

During a welding operation, the fume extraction system 130 may extract fumes produced by the welding operation by conveying a negative air pressure to a proximity of the welding torch 120. The negative pressure generated by the vacuum source 140 is conveyed to the flexible tubes 170, which provides a suction force at the second end 172B to extract weld fumes and convey the weld fumes to a filter at the vacuum source 140. The vacuum source 140 extracts weld fumes from the welding torch 120 by suctioning the weld fumes from the second end 172B and through the first end 172A of the flexible tubes 170, from the intake ports 164 and through the outlet port 166 of the vacuum manifold 160, from the first hose end 142A and through the second hose end 142B of the hose 142, and into the vacuum source 140. In some examples, a filter is provided to filter the weld fume from the airflow. As such, the fume extraction system 130 and/or the fume extractor attachment 150 may provide fume extraction for the robotic welding system 100 during a welding operation.

In some examples, one or more of the flexible tubes 170 may be controlled to not generate a suction force and/or to generate a lesser or greater suction force at the second end 172B when the vacuum source creates the lower air pressure. For example, the vacuum manifold 160, the intake port(s) 164, and/or the flexible tube(s) 170 may be equipped with a valve to control a pressure at the flexible tube 170 and/or an air flow through the flexible tube 170, a respective one of the intake ports 164, and/or of the vacuum manifold 160. For example, an operator may operatively control the suction force of one or more of the flexible tubes 170 by turning one or more manual valves, each associated with one or more of the one or more of the flexible tubes 170. Additionally or alternatively, an operator may operatively control the suction force of one or more of the flexible tubes 170 by transmitting a control signal to turn one or more electrically-controllable valves, each associated with one or more of the one or more flexible tubes 170 by using the control inputs 102 and/or the user interface 104. In still other examples, control circuitry may automatically control the valves based on a position and/or orientation of the welding torch with respect to a workpiece (e.g., lowering a flow of the flexible tube(s) 170 closest to the workpiece and/or based on sensor data (e.g., detecting a fume collection quantity via the flexible tube(s) 170 using one or more sensors and adjusting the valves accordingly).

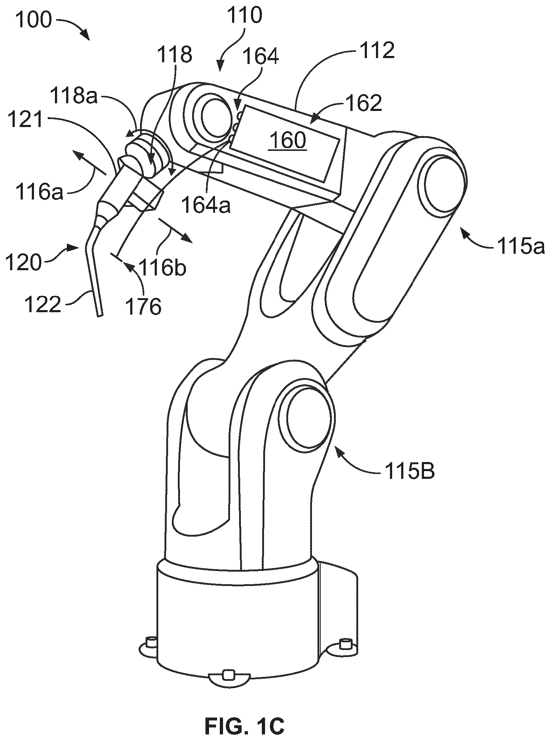

Referring now to FIG. 1C, during a welding operation, either or both of the robotic welding arm 110 and/or the welding torch 120 may move or rotate to, for example, weld at different positions on the work surface 106 (depicted in FIG. 1A). For example, the torch body 121 of the welding torch 120 may be movable in a plurality of movement directions, such as a first movement direction 116A, a second movement direction 116B, and/or one or more additional movement directions. Other components of the welding torch 120 may also be movable relative to the first arm section 112, such as by being movable in directions similar to either or both of the movement directions 116A, 116B and/or one or more additional movement directions. Further, the torch body 121 of the welding torch 120 may be rotatable with respect to the first arm section 112 at a rotation point 118 positioned between the first arm section 112 and the welding torch 120, such that, for example, the torch body 121 may be rotatable in rotational directions 118A. Other components of the welding torch 120 may also be rotatable relative to the first arm section 112, such as by being rotatable in rotational directions similar to the rotational directions 118A and/or one or more additional rotational directions.

The welding torch 120, the arm sections 112, 115A, 115B, and/or any additional and/or alternative sections or components of the robotic welding arm 110 may be re-positionable in additional and/or alternative degrees of freedom. For example, the welding torch 120, the arm sections 112, 115A, 115B, and/or any additional and/or alternative sections or components of the robotic welding arm 110 may be movable in un-depicted movement and/or rotational directions (e.g., similar to the movement directions 116A, 116B) relative to the welding torch 120, the arm sections 112, 115A, 115B, and/or any additional and/or alternative sections or components of the robotic welding arm 110.

Varying a position of the welding torch 120 (via, for example, movement and/or rotation of the first arm section 112 and/or the welding torch 120) may cause a distance between the welding torch 120 and the intake ports 164 and/or the vacuum manifold 160 to similarly vary in magnitude. For example, a variable distance 176 between a first intake port 164A of the vacuum manifold 160 and the nozzle 122 of the welding torch 120 may vary as the welding torch 120 moves or rotates. The movement and rotation varies the length between ones of the intake ports 164 and the location of the nozzle 122. As a result, the resulting distance between each of the intake ports 164 and the arc varies, causing the flexible tubes 174 to attempt to shift relative to the nozzle 122.

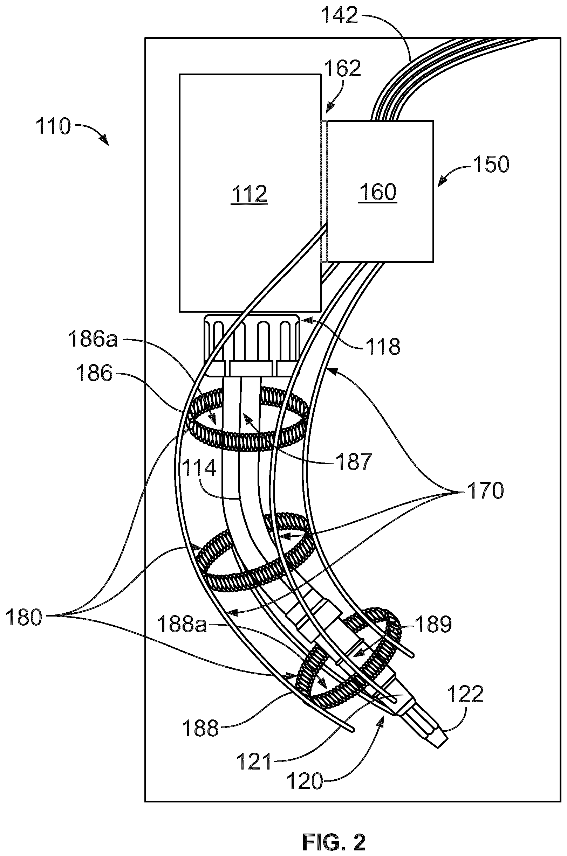

FIG. 2 illustrates an example fume extractor attachment 150 attached to the robotic welding arm 110. As illustrated in FIG. 2, the retainers 180, including retainers 186, 188, each flexibly retain the flexible tubes 170 at corresponding retaining positions in proximity to a second arm section 114 of the robotic welding arm 110 and/or to the welding torch 120. In the example of FIG. 2, the retainers 180 are not rigidly attached to the second arm section 114 or the welding torch 120. Instead, the retainers 180 retain each of the flexible tubes 170 in proximity to the second arm section 114 and the welding torch 120 in spite of movement or rotation of the welding torch 120 or movement or rotation of the second arm section 114 (in, for example, the directions 116A, 116B, 118A of FIG. 1C).

Rather than being directly attached to the second arm section 114 or the welding torch 120, each of the example retainers 180 remains in proximity to the robotic welding arm 110 and/or the welding torch 120 by allowing the robotic welding arm 110 and/or the welding torch 120 to move freely or substantially freely within a respective interior spacing of each of the retainers 180.

Each of the example flexible tubes 170 is attached to and/or retained in proximity to each of the retainers 180. Accordingly, each of the retainers 180 couple the flexible tubes 170 to the robotic welding arm 110 by remaining in proximity to the robotic welding arm 110 and retaining the flexible tubes 170 in proximity to the retainer 180. Such movement and/or rotation does meaningfully affect the respective retaining positions of the retainers 180 of the positions of the flexible tubes 170 in proximity to the welding torch 120 and/or section(s) of the robotic welding arm 110. Additionally, because the retainer 180 and/or the flexible tubes 170 are not rigidly coupled to the welding torch 120, rotation and movement of the welding torch 120 does not create twisting of the flexible tubes 170 or interference between the flexible tubes 170 such as would cause a reduction in fume suction. The retainers 180 retain the flexible tubes 170 in proximity to the source of welding fumes as the welding torch 120 moves and rotates during a welding operation.

Each of the example retainers 182, 184, 186, 188 remains in proximity of the welding torch 120, the first arm section 112, and/or the second arm section 114 across at least 360° of rotation of the first arm section 112 (with respect to, for example, either or both of the second arm section 114 and/or the welding torch 120), of the second arm section 114 (with respect to, for example, either or both of the first arm section 112 and/or the welding torch 120), and/or of the welding torch 120 (with respect to, for example, either or both of the arm sections 112, 114). For example, the retainers 186, 188 permit the second arm section 114 and the welding torch 120, respectively, to rotate within an interior spacing 186A of the third retainer 186 and an interior spacing 188A of the fourth retainer 188, respectively.

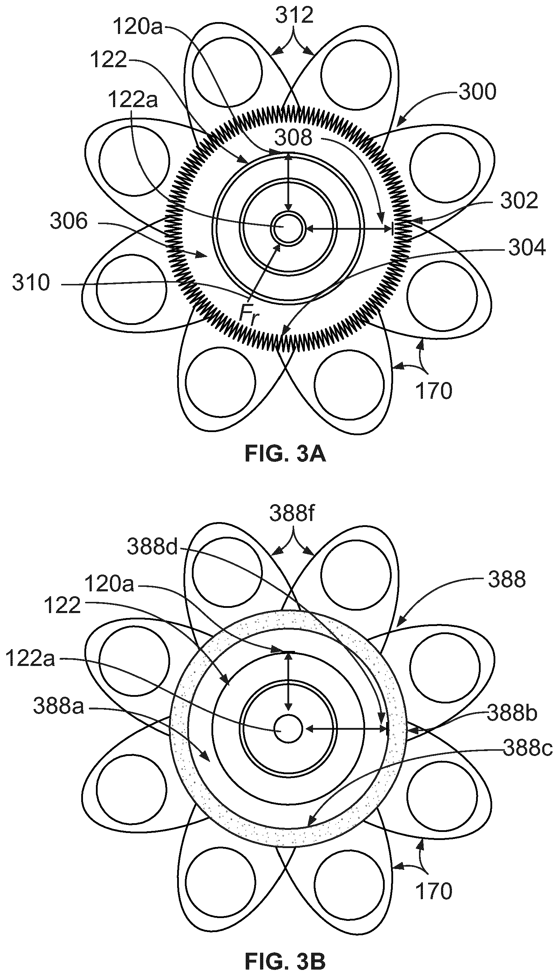

FIG. 3A illustrates an embodiment of an example retainer 300 in a view taken along an axis extending from a tip 122A of the nozzle 122. The retainer 300 may be used to implement any of the example retainers disclosed above with reference to FIGS. 1B and/or 2. In the example of FIG. 3A, the retainer 300 is a toroidal spring having windings 302 and an interior portion 304 of the windings 302 defining an interior spacing 306. The interior spacing 306, has a flexible shape which is nominally circular when in a resting position (as shown the plane illustrated in FIG. 3A). However, the interior portion 304 of the windings 302 may define an expandable radius 308. For example, the retainer 300 may be a toroidal spring or other flexible shape which is biased by an inward radial compression force 310 (also denoted in FIG. 3A as *Fᵣ*; for example, a biasing spring force). The inward radial compression force 310 may be created by expanding the retainer 300 during the installation process (e.g., a resting radius of the retainer 300 is less than an outer radius of a corresponding portion of the welding torch 120 at a location of the retainer 300).

When installed, the example retainer 300 applies the inward radial compression force 310 to retain a corresponding portion of the flexible tubes 170 in proximity to the welding torch 120. The biasing of the inward radial compression force 310 allows the welding torch 120 to move and/or rotate substantially freely within the interior spacing 306. The expandable radius 308 and/or the flexible shape of the retainer 300 adapt in response to forces caused by rotation and/or movement of the welding torch 120. In some other examples, the expandable radius 308 is greater than or equal to the welding torch radius 120A.

In the example of FIG. 3A, the retainer 300 retains the flexible tubes 170 in proximity to the retainer 300 by comprising loops 312. Each of the example loops 312 extend around a respective one of the flexible tubes 170 and is attached to a portion of the windings 302 of the fourth retainer 300. One of the loops 312 may retain one or more of the flexible tubes 170 and/or one of the flexible tubes 170 may be retained by one or more of the loops 312. The loops 312 may loosely hang around a respective one or more of the flexible tubes 170 or may tightly grip a respective one or more of the flexible tubes 170. Additionally or alternatively, the flexible tubes 170 may be retained in proximity to the 300 by being looped or passed through the windings 302, and/or using any other appropriate attachment mechanisms.

The loops 312 or other attachment mechanisms may secure the retainer 300 to a static location along the length of each of the flexible tubes 170 to allow the flexible tubes 170 to support the retainer 300. Additionally or alternatively, the loops 312 or other attachment mechanisms may be loosely coupled to the retainer 300, and the retainer 300 may be supported at a location along a length of the welding torch 120 via friction or connection to the welding torch.

FIG. 3B depicts another example retainer 388 that may be used to implement the retainers of FIGS. 1B and/or 2. The example retainer 388 is a rigid retainer that defines an interior spacing 388A having a rigid radius 388D. The rigid retainer 388 is positioned in proximity to the welding torch 120 such that the welding torch 120 is within the interior spacing 388A. In contrast to the example retainer 300 depicted in FIG. 3A, the interior spacing 388A and the rigid radius 388D are not be flexible or variable. Due to the interior spacing 388A, the welding torch 120 may, as in the example of FIG. 3A, move and/or rotate substantially freely within the interior spacing 388A, as the welding torch radius 120A is lesser in magnitude than the rigid radius 388D.

While the shape of the rigid retainer 388 and the magnitude of the rigid radius 388D do not change, movement and/or rotation of the welding torch 120 may cause the welding torch 120 to contact some or all of an interior portion 388C of the rigid retainer 388, thereby forcing movement of the rigid retainer 388 and/or bending the flexible tubes 170 according to the force applied and the arrangement of the flexible tubes 170 with respect to the vacuum manifold 160 and the rigid retainer 388.

The rigid retainer 388 retains the flexible tubes 170 in proximity to the rigid retainer 388 using loops 388F or another attachment mechanism. The loops 388F may be similar, identical, or different than any of the example loops 312 discussed above with reference to FIG. 3A.

The example retainers 180 of FIGS. 1B and 2 may include any combination of toroidal springs or other flexible retainers rigid retainers, and/or other types of retainers.

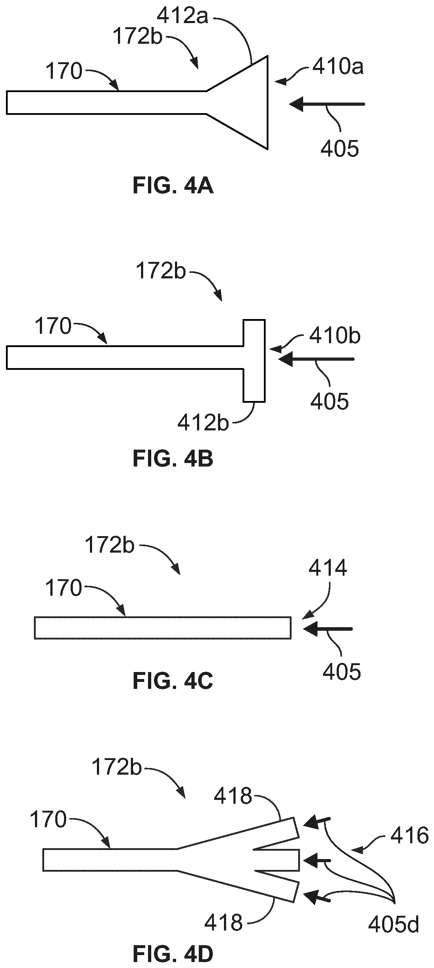

The flexible tubes 170 may include inlet flanges and/or inlet ends positioned at the second ends 172B of the flexible tubes 170. FIGS. 4A-4D illustrate flexible tubes 170 having example inlet flanges. Such inlet flanges and/or inlet ends, including those illustrated in FIGS. 4A-4D, may benefit, for example, particular welding operations and/or welding contexts by, for example, providing improved fume extraction as affected by such welding operations and/or welding contexts.

FIG. 4A illustrates an example second end 172B of flexible tube 170 having a first inlet flange 410A having a frustum shape 412A. The frustum shape 412A may have a cross-section having a circular shape (such that the flange 410A has, for example, a conical shape), a square shape (such that the flange 410A has, for example, a triangular shape), or any other shape provided by any other cross-section. The frustum shape 412A may provide a greater surface area of suction for each of the flexible tubes 170 which include the first inlet flange 410A, at the potential cost of reduced suction power per unit of suction area.

FIG. 4B illustrates an example second end 172B of flexible tube 170 having a second inlet flange 410B having a rectangular shape 412B. In embodiments, the rectangular shape 412B may comprise a depth into the page, such that, in three dimensions, the second inlet flange 410B retains one or more substantially two-dimensional surfaces having the rectangular shape 412B. In other embodiments, the rectangular shape 412B may be, in three dimensions, partially or wholly cylindrical by, for example, the rectangular shape 412B being rotated partially or wholly about the suction axis 405. In embodiments, the rectangular shape 412B may provide a greater surface area of suction for each of the flexible tubes 170 which include the second inlet flange 410B, at the potential cost of reduced suction power per unit of suction area.

FIG. 4C illustrates an example second end 172B of flexible tube 170 having an inlet end 414. The inlet end 414 may provide a surface upon which to attach an inlet flange (e.g., the inlet flanges 410A, 410B) or provide a standard suctioning shape and surface area for the second end 172B. The inlet end 414 may be integrally formed with and/or formed from the same material as some or all of the rest of a respective one of the flexible tubes 170.

FIG. 4D illustrates an example second end 172B of flexible tube 170 having a split inlet flange 416 including multiple split inlets 418. While the example of FIG. 4D depicts three split inlets 418, the split inlet flange 416 may include two or more split inlets. Furthermore, while FIG. 4D depicts each of the split inlets 418 as having non-parallel suction axes 405D, in other embodiments, two or more of the split inlets 418 may define suction axes 405D which are parallel or forming any angle with respect to the suction axes 405D.. The split inlet flange 416 may attached to the inlet end 414 and/or may be integrally formed with and/or formed from the same material as some or all of the rest of a respective one of the flexible tubes 170.

Referring again to FIGS. 4A-4D, any, some, or all of the second ends 172B of the flexible tubes 170 may include any of the inlet flanges 410A, 410B, 416, the inlet end 414, and/or the split inlets 418, as described above with respect to FIGS. 4A-4D, including a same type of inlet flange or a combination of types of inlet flanges 410A, 410B, 416, the inlet end 414, and/or the split inlets 418. In embodiments, any of the inlet flanges 410A, 410B, 416 may attachable and/or detachable from the second end 172B, such that any combination and/or configuration of the inlet flanges 410A, 410B, 416 may be used to improve fume extraction based on a particular welding operation and/or context.

Referring again to FIGS. 1B and 1C, the flexible tubes 170 may define an elastic length which can vary in magnitude as forces (for example, stretching or compressing forces due to movement and/or rotation of the welding torch 120, as conveyed by the retainers 180) are exerted upon the flexible tubes 170. For example, the first flexible tube 174 and/or any one or more other flexible tubes of the flexible tube 170 may define an elastic length configured to extend and/or contract the variable distance 176 between the vacuum manifold 160 and the nozzle 122 of the welding torch 120.

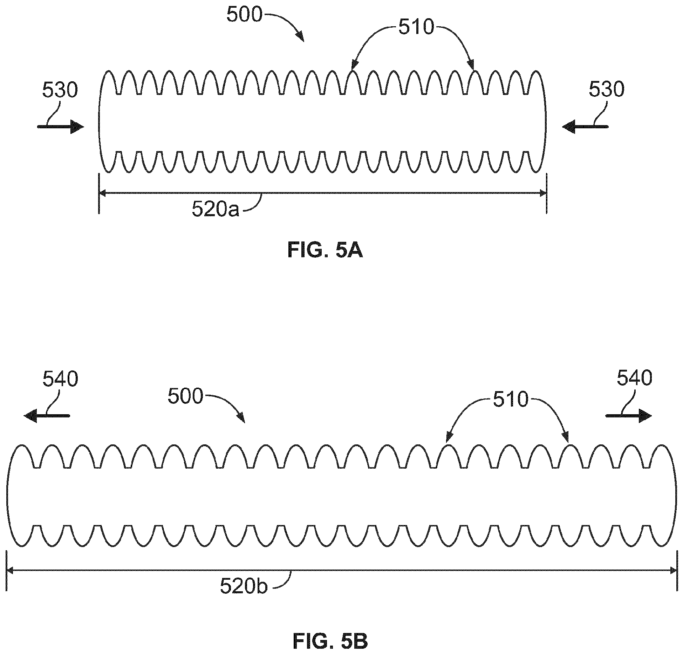

For example, and referring now to FIGS. 5A and 5B, any of the flexible tubes 170 which may have an elastic length may be configured to extend or contract across a range of variable lengths (for example, across the varying magnitudes of the variable distance 176) by being or including a corrugated tube 500. The example corrugated tube 500 includes one or more corrugations 510 along at least a portion of the length of the corrugated tube 500. The corrugations 510 may each be independently or collectively variable between one or more compressed states and one or more expanded states such that the corrugated tube 500 defines a compressed length 520A, an expanded length 520B, and one or more intermediate lengths longer than the compressed length 520A and shorter than the expanded length 520B. Forces acting upon the corrugated tube 500 (e.g., movement of the welding torch 120 and the retainers 180 coupled to the flexible tubes 170) may cause the corrugations 510 to change states, thereby varying a length of the corrugated tube 500. Compressing forces 530 may reduce a length of the corrugated tube 500, while expanding forces 540 expand a length of the corrugated tube 500. Additionally or alternatively, both compressing forces 530 and expanding forces 540 may cause the corrugations 510 to expand or contract unevenly, causing the corrugated tube 500 to bend.

For example, configuring the first flexible tube 174 in the example of FIG. 1B with the corrugated tube 500 and with reference to FIGS. 1C and 3A, the compressing forces 530 may be caused by, for example, the first arm section 112 and the welding torch 120 becoming more linearly aligned such that the variable distance 176 reduces in magnitude causing the retainers 182, 184 to thereby move closer to the vacuum manifold 160, and the expanding forces 540 may be caused by, for example, the first arm section 112 and the welding torch 120 becoming less linearly aligned such that the variable distance 176 expands in magnitude causing the retainers 182, 184 to thereby move closer to the vacuum manifold 160. These movements of either or both of the retainers 182, 184 may exert the forces 530, 540 on the corrugated tube 500 by, for example, the windings 302 and/or either or both of the loops 312, 388F exerting a frictional force or a normal force on the corrugated tube 500 and/or the corrugations 510.

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example,"x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

While the present method and/or system has been described with reference to certain implementations, it will be understood by those skilled in the art that various changes may be made and equivalents may be substituted without departing from the scope of the present disclosure. In addition, many modifications may be made to adapt a particular situation or material to the teachings of the present disclosure without departing from its scope. For example, systems, blocks, and/or other components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.

Certain embodiments of the invention are described in the following clauses :
Clause 1 : A fume extractor attachment for a robotic welding arm, the fume extractor attachment comprising:
   a vacuum manifold, comprising:
   a plurality of intake ports;
   an arm attachment mount configured to attach to a first arm section of the robotic welding arm; and
   an outlet port configured to connect to a vacuum source;
   a plurality of flexible tubes, each comprising a first end and a second end opposite the first end, wherein the first end of each of the flexible tubes is coupled to at least one of the intake ports; and
   one or more retainers configured to retain each of the flexible tubes in proximity to a welding torch coupled to the robotic welding arm as the welding torch rotates and moves.
Clause 2 : The fume extractor attachment of clause 1, wherein at least one of the flexible tubes comprises an elastic length between the first end and the second end, the elastic length configured to extend or contract a variable distance between the vacuum manifold and a nozzle of the welding torch.
Clause 3 : The fume extractor attachment of clause 1, wherein at least one of the flexible tubes is a corrugated flexible tubes.
Clause 4 : The fume extractor attachment of clause 1, wherein at least one of the flexible tubes comprises an inlet flange positioned at the second end.
Clause 5 : The fume extractor attachment of clause 4, wherein each of the inlet flanges comprises at least one of a conical shape, a rectangular shape, or a triangular shape.
Clause 6: The fume extractor attachment of clause 1, wherein each of the one or more retainers is configured to couple at least one of the flexible tubes to the robotic welding arm by remaining in proximity to the robotic welding arm and retaining the at least one of the flexible tubes in proximity to the retainer.
Clause 7: The fume extractor attachment of clause 6, wherein the one or more retainers are configured to remain in proximity to the welding torch across at least 360° of rotation of the welding torch with respect to the first arm section.
Clause 8 : The fume extractor attachment of clause 7, wherein the one or more retainers are configured to remain in proximity to the welding torch across at least 360° of rotation of the welding torch with respect to the one or more retainers and the flexible tubes.
Clause 9 : The fume extractor attachment of clause 6, wherein at least one of the one or more retainers is configured to remain in proximity to the welding torch such that the second ends of each of the flexible tubes are positioned adjacent to a nozzle of the welding torch.
Clause 10 : The fume extractor attachment of clause 6, wherein:
   a first retainer of the one or more retainers is positioned at a retaining position in proximity to the welding torch; and
   the first retainer applies an inward radial compression force configured to retain the retaining position in proximity to the welding torch, wherein an interior portion of the first retainer defines an expandable radius or a flexible shape which is adjusted based on at least one of rotation or movement of the welding torch.
Clause 11 : The fume extractor attachment of clause 1, wherein each of the one or more retainers comprises a toroidal spring extending around the welding torch, the flexible tubes configured to be retained by respective windings of the toroidal spring.
Clause 12 : The fume extractor attachment of clause 1, wherein each of the one or more retainers is a rigid retainer.
Clause 13 : The fume extractor attachment of clause 1, wherein at least one of the flexible tubes is controllable to adjust an air flow through the flexible tubes.
Clause 14: A robotic welding system comprising:
   a robotic welding arm comprising a first arm section and a welding torch coupled to the first arm section; and
   a fume extractor attachment comprising:
   a vacuum manifold comprising:
   a plurality of intake ports;
   an outlet port configured to connect to a vacuum source; and
   an arm attachment mount configured to attach to the first arm section of the robotic welding arm;
   a plurality of flexible tubes, each comprising a first end and a second end opposite the first end, wherein the first end of each of the flexible tubes is coupled to at least one of the intake ports; and
   one or more retainers configured to retain each of the flexible tubes in proximity to the welding torch as the welding torch rotates and moves.
Clause 15 : The robotic welding system of clause 14, wherein each of the one or more retainers is configured to couple the flexible tubes to the robotic welding arm by remaining in proximity to the robotic welding arm and retaining the flexible tubes in proximity to the retainer.
Clause 16 : The robotic welding system of clause 15, wherein:
   the welding torch is configured to rotate with respect to the first arm section; and
   the retainers are configured to remain in proximity to the welding torch across at least 360° of rotation of the welding torch with respect to the first arm section.
Clause 17 : The robotic welding system of clause 16, wherein the welding torch is further configured to rotate with respect to the one or more retainers and the flexible tubes.
Clause 18 : The robotic welding system of clause 15, wherein:
   a first retainer of the one or more retainers is positioned at a retaining position in proximity to the welding torch; and
   the first retainer applies an inward radial compression force configured to retain the retaining position in proximity to the welding torch, wherein an interior portion of the first retainer defines an expandable radius or a flexible shape which is adjusted based on at least one of rotation or movement of the welding torch.
Clause 19 : The robotic welding system of clause 14, wherein:
   the one or more retainers comprise a first retainer and a second retainer;
   the first retainer retains each of the flexible tubes in proximity to a second arm section of the robotic welding arm, the welding torch being attached to the second arm section; and
   the second retainer retains each of the flexible tubes in proximity to a third arm section of the robotic welding arm between the first arm section and the second arm section.
Clause 20 : A fume extraction system for a robotic welding arm, the fume extraction system comprising:
   a vacuum source comprising a hose port;
   a hose comprising a first hose end and a second hose end opposite the first hose end, wherein the second hose end is coupled to the hose port; and
   a fume extractor attachment comprising:
   a vacuum manifold comprising a plurality of intake ports, an outlet port coupled to the first hose end, and an arm attachment mount configured to attach to an arm section of a robotic welding arm, wherein the vacuum source extracts fumes from a welding torch of the robotic welding arm through the intake ports, out of the outlet port and into the hose, and into the hose port and the vacuum source;
   a plurality of flexible tubes, each comprising a first end and a second end opposite the first end, wherein the first end of each of the flexible tubes is coupled to at least one of the intake ports, and
   one or more retainers configured to retain each of the flexible tubes in proximity to a welding torch coupled to the robotic welding arm as the welding torch rotates and moves.

## Claims

1. A fume extractor attachment for a robotic welding arm, the fume extractor attachment comprising:
a vacuum manifold, comprising:
a plurality of intake ports;
an arm attachment mount configured to attach to a first arm section of the robotic welding arm; and
an outlet port configured to connect to a vacuum source;
a plurality of flexible tubes, each comprising a first end and a second end opposite the first end, wherein the first end of each of the flexible tubes is coupled to at least one of the intake ports; and
one or more retainers configured to retain each of the flexible tubes in proximity to a welding torch coupled to the robotic welding arm as the welding torch rotates and moves.

2. The fume extractor attachment of claim 1, wherein either :
- at least one of the flexible tubes comprises an elastic length between the first end and the second end, the elastic length configured to extend or contract a variable distance between the vacuum manifold and a nozzle of the welding torch ; or
- at least one of the flexible tubes is a corrugated flexible tubes.

3. The fume extractor attachment of claim 1, wherein at least one of the flexible tubes comprises an inlet flange positioned at the second end and optionally each of the inlet flanges comprises at least one of a conical shape, a rectangular shape, or a triangular shape.

4. The fume extractor attachment of claim 1, wherein each of the one or more retainers is configured to couple at least one of the flexible tubes to the robotic welding arm by remaining in proximity to the robotic welding arm and retaining the at least one of the flexible tubes in proximity to the retainer.

5. The fume extractor attachment of claim 4, wherein the one or more retainers are configured to remain in proximity to the welding torch across at least 360° of rotation of the welding torch with respect to the first arm section, and optionally the one or more retainers are configured to remain in proximity to the welding torch across at least 360° of rotation of the welding torch with respect to the one or more retainers and the flexible tubes.

6. The fume extractor attachment of claim 4, wherein at least one of the one or more retainers is configured to remain in proximity to the welding torch such that the second ends of each of the flexible tubes are positioned adjacent to a nozzle of the welding torch.

7. The fume extractor attachment of claim 4, wherein:
a first retainer of the one or more retainers is positioned at a retaining position in proximity to the welding torch; and
the first retainer applies an inward radial compression force configured to retain the retaining position in proximity to the welding torch, wherein an interior portion of the first retainer defines an expandable radius or a flexible shape which is adjusted based on at least one of rotation or movement of the welding torch.

8. The fume extractor attachment of claim 1, wherein either each of the one or more retainers comprises a toroidal spring extending around the welding torch, the flexible tubes configured to be retained by respective windings of the toroidal spring; or
each of the one or more retainers is a rigid retainer; or
at least one of the flexible tubes is controllable to adjust an air flow through the flexible tubes.

9. A robotic welding system comprising:
a robotic welding arm comprising a first arm section and a welding torch coupled to the first arm section; and
a fume extractor attachment comprising:
a vacuum manifold comprising:
a plurality of intake ports;
an outlet port configured to connect to a vacuum source; and
an arm attachment mount configured to attach to the first arm section of the robotic welding arm;
a plurality of flexible tubes, each comprising a first end and a second end opposite the first end, wherein the first end of each of the flexible tubes is coupled to at least one of the intake ports; and
one or more retainers configured to retain each of the flexible tubes in proximity to the welding torch as the welding torch rotates and moves.

10. The robotic welding system of claim 9, wherein each of the one or more retainers is configured to couple the flexible tubes to the robotic welding arm by remaining in proximity to the robotic welding arm and retaining the flexible tubes in proximity to the retainer.

11. The robotic welding system of claim 10, wherein:
the welding torch is configured to rotate with respect to the first arm section; and
the retainers are configured to remain in proximity to the welding torch across at least 360° of rotation of the welding torch with respect to the first arm section.

12. The robotic welding system of claim 11, wherein the welding torch is further configured to rotate with respect to the one or more retainers and the flexible tubes.

13. The robotic welding system of claim 10, wherein:
a first retainer of the one or more retainers is positioned at a retaining position in proximity to the welding torch; and
the first retainer applies an inward radial compression force configured to retain the retaining position in proximity to the welding torch, wherein an interior portion of the first retainer defines an expandable radius or a flexible shape which is adjusted based on at least one of rotation or movement of the welding torch.

14. The robotic welding system of claim 9, wherein:
the one or more retainers comprise a first retainer and a second retainer;
the first retainer retains each of the flexible tubes in proximity to a second arm section of the robotic welding arm, the welding torch being attached to the second arm section; and
the second retainer retains each of the flexible tubes in proximity to a third arm section of the robotic welding arm between the first arm section and the second arm section.

15. A fume extraction system for a robotic welding arm, the fume extraction system comprising:
a vacuum source comprising a hose port;
a hose comprising a first hose end and a second hose end opposite the first hose end, wherein the second hose end is coupled to the hose port; and
a fume extractor attachment comprising:
a vacuum manifold comprising a plurality of intake ports, an outlet port coupled to the first hose end, and an arm attachment mount configured to attach to an arm section of a robotic welding arm, wherein the vacuum source extracts fumes from a welding torch of the robotic welding arm through the intake ports, out of the outlet port and into the hose, and into the hose port and the vacuum source;
a plurality of flexible tubes, each comprising a first end and a second end opposite the first end, wherein the first end of each of the flexible tubes is coupled to at least one of the intake ports, and
one or more retainers configured to retain each of the flexible tubes in proximity to a welding torch coupled to the robotic welding arm as the welding torch rotates and moves.
